# DEMANDE DE BREVET EUROPEEN

(11) **EP 1 385 133 A1**
(43) Date de publication de la demande: **28.01.2004**
(21) Numéro de dépôt: 03356115.0
(22) Date de dépôt: 25.07.2003
(51) Int. Cl.: G09F 7/00, B60R 13/10

(54) **Panneau informatif**

(30) Priorité: 26.07.2002 FR 0209487
(71) Demandeur: Faab Industrie Société Anonyme, 01007 Bourg en Bresse (FR)
(72) Inventeur: Ruffin, Patrick, 74720 Megeve (FR)
(74) Mandataire: Thibault, Jean-Marc

(57) **Abrégé**

L'invention concerne un panneau informatif comportant un flan-support (**2**) servant à la réception d'une plaque de contraste (**3**) adaptée pour faire apparaître au moins un signe figuratif et/ou dénominatif après au moins une opération de réalisation du ou des signe(s).

Selon l'invention, le flan-support (**2**) est réalisé par au moins une plaque de matière plastique **(2**_{**1**}**)** présentant une épaisseur comprise entre 0,3 et 2mm et de préférence entre 0,5 et 0,9mm et de préférence encore de l'ordre de 0,7mm.

## Description

La présente invention concerne le domaine technique des panneaux de présentation d'informations qui peuvent être utilisés dans de nombreuses applications telles que les panneaux routiers, les panneaux indicateurs, les plaques signalétiques ou minéralogiques sans que cet énoncé revête un caractère limitatif.

Dans le domaine technique ci-dessus, il est connu de réaliser un panneau informatif à l'aide d'un flan-support servant au montage d'une plaque de contraste adaptée pour faire apparaître des caractères ou des signes de nature figurative et/ou dénominative.

Selon une première technique, il est connu de réaliser les signes par une technique d'emboutissage en utilisant en tant que plaque de contraste, une plaque de fond appelée communément clinquant disposée sur la face supérieure du flan-support qui présente l'aspect prévu pour les signes définitifs. L'emboutissage du flan-support permet de repousser à froid, à travers la plaque, des portions du flan-support dont des parties correspondantes de la plaque de fond sont détachées. Ainsi, les portions repoussées du flan-support apparaissent en relief à travers la plaque de fond pour constituer les signes ou caractères.

Pour mener à bien l'emboutissage des caractères à froid, il est connu, dans l'état de la technique, d'utiliser un outillage formé d'un jeu d'éléments mâles dit poinçons et d'éléments femelles dit matrices montés sur une presse. Chaque outil formé d'un poinçon et d'une matrice associée est adapté pour assurer l'emboutissage d'un caractère ou d'un signe déterminé. En pratique, il apparaît notamment au niveau de la matrice, une usure qui est hétérogène d'un caractère à l'autre car elle est fonction du graphisme et/ou du nombre d'utilisations. Il s'ensuit lors de l'opération d'emboutissage d'une série de caractères, une différence de comportement à l'emboutissage conduisant soit à une découpe de la plaque de fond et du flan-support sur tout ou partie du signe embouti, soit à l'absence de découpe de la plaque de fond.

Cet inconvénient apparaît d'autant plus marqué lorsque les caractères présentent une partie de la plaque de fond entièrement découpée, appelée également îlot qui est ainsi susceptible de s'échapper de son logement formé par le caractère embouti.

Il apparaît donc que cette technique de réalisation d'un panneau informatif ne donne pas entière satisfaction en pratique et de plus s'avère relativement onéreuse en raison de l'utilisation d'une plaque de fond métallique généralement en aluminium dont le cours instable influe fortement sur le prix de revient d'un tel panneau informatif.

Pour tenter de remédier aux problèmes de la réalisation des caractères dit à îlot, il est connu une autre technique consistant à utiliser comme plaque de contraste, un film adhésif du type non permanent, métallique ou non revêtu ou non d'un film de décoration. L'opération d'emboutissage du flan-support est réalisée comme décrit ci-dessus avec une opération supplémentaire d'enlèvement des chutes par le décollage des portions adhésives du ou des films.

Si cette technique permet d'apporter une réponse pour la réalisation des caractères de type à îlot, cette solution présente toujours l'inconvénient d'une usure hétérogène de l'outillage d'emboutissage utilisé et d'un coût de fabrication élevé.

Dans le même sens, la demande de brevet FR 2 672 553 a proposé la mise en oeuvre d'un procédé pour l'obtention de plaques d'immatriculation comportant plus spécifiquement des caractères à îlots qui posent un problème en raison de défauts de fixation du film délimitant de tels caractères. Ce document prévoit d'utiliser une plaque de base soit métallique, soit thermoplastique malléable associée à une lame adhésive permanente. Toutefois, ce document ne précise pas les caractéristiques du flan-support pour permettre de disposer d'un panneau informatif offrant une qualité optimum de définition des signes et/ou des caractères.

De même, le document FR 2 206 023 décrit également un procédé de fabrication d'une plaque d'immatriculation comportant une plaque telle qu'en aluminium et des feuilles en matière plastique disposées de part et d'autre de la plaque en aluminium. Ce document ne décrit pas les caractéristiques du flan-support afin d'obtenir un panneau informatif offrant une qualité optimum de définition pour les signes et/ou caractères réalisés.

Dans l'art antérieur, il est connu aussi une autre technique consistant à utiliser un flan-support métallique en général en aluminium revêtu ou non d'un film de surface destiné à être déformé pour faire ressortir en relief les signes ou les caractères choisis. Les surfaces en relief du flan-support sont destinées à recevoir en tant que plaque de contraste, une pellicule colorée obtenue de manière classique par un marquage à chaud ou par une opération de peinture. Si une telle technique permet d'éviter une découpe de la plaque de contraste et par suite, les inconvénients liés à cette découpe, il doit être constaté que les surfaces en relief formant les signes n'apparaissent pas parfaitement planes de sorte que lors de l'opération de coloration, les signes n'apparaissent pas uniformément colorés. En d'autres termes, cette technique s'avère également relativement onéreuse par l'utilisation d'un flan-support en aluminium tout en ne donnant pas entière satisfaction sur la qualité de définition des caractères à faire apparaître sur un panneau informatif.

L'analyse des diverses solutions antérieures connues conduit à constater qu'il apparaît le besoin de pouvoir disposer d'un panneau informatif offrant une qualité optimum de définition des signes et/ou des caractères tout en présentant un coût de fabrication réduit.

L'objet de l'invention vise donc à satisfaire ce besoin en proposant un nouveau panneau informatif comportant un flan-support servant à la réception d'une plaque de contraste adaptée pour faire apparaître au moins un signe figuratif et/ou dénominatif après au moins une opération de réalisation du ou des signe(s).

Selon l'invention, le flan-support est réalisé par au moins une plaque de matière plastique présentant une épaisseur comprise entre 0,3 et 2mm et de préférence entre 0,5 et 0,9mm et de préférence encore de l'ordre de 0,7mm.

Selon une autre caractéristique de l'invention, le flan-support est réalisé par au moins une plaque de matière plastique fixée avec une plaque métallique.

Diverses autres caractéristiques ressortent de la description faite ci-dessous en référence aux dessins annexés qui montrent, à titre d'exemples non limitatifs, des formes de réalisation de l'objet de l'invention.

**La fig. 1** est une vue en plan d'un premier exemple de réalisation d'un panneau informatif conforme à l'invention.

**Les fig. 2 et 3** sont des vues en coupe transversale du panneau informatif selon la fig. 1 prise selon deux phases caractéristiques de réalisation dudit panneau.

**Les fig. 4 et 5** illustrent deux coupes transversales d'un deuxième exemple de réalisation d'un panneau informatif illustré selon deux phases caractéristiques de fabrication.

**Les fig. 6 à 8** sont trois vues en coupe transversale d'un troisième exemple de réalisation d'un panneau informatif selon trois phases caractéristiques de réalisation.

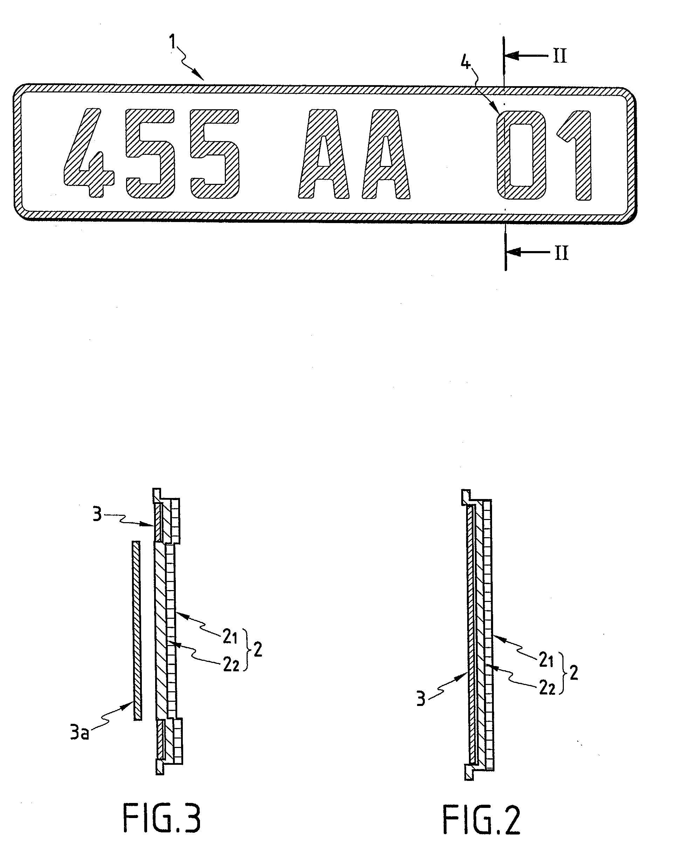

**Les fig. 1 à 3** montrent un premier exemple de réalisation d'un panneau informatif **1** qui est constitué par un flan-support **2** servant au montage ou à la réception d'une plaque de contraste **3** adaptée pour faire apparaître au moins un signe ou caractère **4** de nature figurative et/ou dénominative. Même si le domaine préféré de l'invention concerne la fabrication de plaques signalétiques pour véhicules automobiles, le domaine de l'invention concerne tous les panneaux informatifs, qu'il s'agisse de plaques signalétiques, de panneaux indicateurs, de panneaux de présentation d'informations, tels que ceux constitutifs des numérotations et/ou d'identification des immeubles ou artères de circulation urbaine, etc.

Conformément à l'invention, le flan-support **2** est réalisé par au moins une plaque de matière plastique qui possède une capacité de déformation ou d'allongement à la rupture sous contrainte largement supérieure à un matériau de type métallique. Dans l'exemple de réalisation illustré aux **fig. 1 à 3**, le flan-support **2** est réalisé par au moins une plaque de matière plastique **2**_{**1**} fixée avec une plaque métallique **2**_{**2**} réalisée par exemple en aluminium. Selon une caractéristique préférée de réalisation, la plaque métallique **2**_{**2**} est interposée entre la plaque de contraste 3 et la plaque de matière plastique **2**_{**1**}**.**

La plaque de matière plastique **2**_{**1**} présente une épaisseur comprise entre 0,3 et 2mm, de préférence entre 0,5 et 0,9 mm, et de préférence encore de l'ordre de 0,7mm. Dans le même sens, la plaque métallique 2₂ possède une épaisseur comprise entre 0 et 1mm, de préférence entre 0,3 et 0,7 et de préférence encore de l'ordre de 0,5mm.

La plaque de matière plastique **2**_{**1**} est réalisée en tout matériau approprié pour permettre, seule ou en combinaison, de servir de support pour une plaque de contraste **3** adaptée pour faire apparaître les signes **4** après une opération d'emboutissage ou de déformation du flan-support **2**. Selon une variante de réalisation, la plaque de matière plastique **2**_{**1**} est réalisée à partir de polypropylène de préférence recyclée. Avantageusement, la plaque de matière plastique **2**_{**1**} comporte des charges permettant d'augmenter sa rigidité et/ou son aptitude au vieillissement. Cette plaque de matière plastique **2**_{**1**} est fixée avec la plaque métallique **2**_{**2**} à l'aide de tout moyen d'assemblage du type mécanique ou adhésif.

Dans l'exemple de réalisation illustré aux **fig. 1 à 3**, un tel flan-support **2** est destiné à être assemblé avec une plaque de contraste **3** réalisée par une plaque de fond métallique appelée communément clinquant. Cette plaque de fond métallique **3** est fixé au flan-support **2** par tout moyen approprié tel que par exemple à l'aide d'un moyen adhésif (colle) ou un moyen mécanique tel qu'une déformation périphérique du flan-support conduisant à l'obtention d'un rebord saillant emprisonnant la plaque de fond **3**.

Tel que cela ressort plus précisément de la **fig. 3**, une opération d'emboutissage du flan-support **2** permet de repousser à froid à travers la plaque de fond métallique **3**, des portions du flan-support **2** dont des parties correspondantes **3**_{**a**} de la plaque de fond **3** sont détachées. Les portions repoussées du flan-support **2** apparaissent ainsi en relief à travers la plaque de fond **3** pour constituer les signes ou les caractères **4**.

L'utilisation d'un flan-support **2** selon l'invention permet de bénéficier des caractéristiques mécaniques de la plaque de matière plastique **2**_{**1**} pour éviter les phénomènes de cisaillement connus dans la technique d'emboutissage classique et ainsi obtenir une latitude de profondeur d'emboutissage plus étendue que celle de l'art antérieur. L'utilisation d'un flan-support **2** selon l'invention permet d'éviter une découpe du flan-support **2** sur tout ou partie du signe embouti. De même, il apparaît une bonne tenue mécanique pour les parties de la plaque de fond **3** entièrement découpées appelées îlot. Enfin, la réalisation du flan-support **2** avec au moins une plaque de matière plastique **2**_{**1**} permet de réduire le coût de réalisation du flan-support **2**, et par suite du panneau informatif, en limitant l'épaisseur de la plaque métallique **2**_{**2**}**,** voire en supprimant l'utilisation d'une plaque métallique.

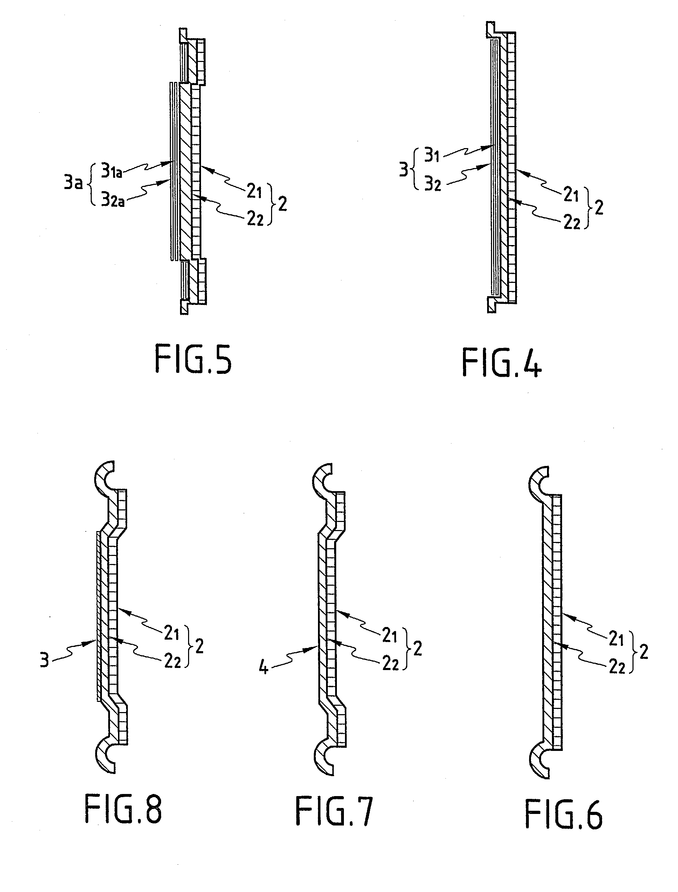

Les **fig. 4 et 5** illustrent une deuxième variante de réalisation d'un panneau informatif **1** conforme à l'invention comportant un flan-support **2** sur lequel est fixée une plaque de contraste 3 réalisée par un film adhésif **3**_{**1**} à caractère métallique ou non et éventuellement revêtu d'un film décoratif **3**_{**2**}. Le film adhésif **3**_{**1**} fixé sur le flan-support **2** est du type enlevable ou non permanent.

Une opération d'emboutissage du flan-support **2** permet de repousser à froid à travers la plaque de contraste 3, des portions du flan-support **2** dont des parties correspondantes **3**_{**a**} **(3**_{**1a**}**, 3**_{**2a**}**)** de la plaque de contraste sont cisaillées puis enlevées ou détachées. Ainsi, les portions repoussées du flan-support apparaissent en relief à travers la plaque de contraste **3** pour constituer les caractères. Les avantages de l'utilisation d'un flan-support **2** conforme à l'invention sont les mêmes que ceux décrits en relation de la variante de réalisation illustrée aux fig. 1 à 3.

Les **fig. 6 à 8** illustrent un autre exemple de réalisation d'un panneau informatif **1** conforme à l'invention comportant un flan-support **2** destiné à recevoir la plaque de contraste **3** réalisée par une pellicule colorée obtenue par une opération de marquage à chaud ou de peinture.

Le flan-support **2** conforme à l'invention est destiné à être déformé pour obtenir des parties en relief correspondant aux signes **4**. Ces surfaces en relief **4** sont ensuite colorées de manière connue selon une opération de marquage à chaud ou par une peinture. Dans la mesure où le flan-support **2** conforme à l'invention présente une aptitude à la déformation améliorée par rapport au flan-support tout métallique de l'art antérieur, il peut être obtenu une meilleure planéité des surfaces en relief et par suite une meilleure définition des caractères **4** réalisés.

L'invention n'est pas limitée aux exemples décrits et représentés car diverses modifications peuvent y être apportées sans sortir de son cadre.

## Revendications

1. Panneau informatif comportant un flan-support (**2**) servant à la réception d'une plaque de contraste (**3**) adaptée pour faire apparaître au moins un signe (**4**) figuratif et/ou dénominatif après au moins une opération de réalisation du ou des signe(s), **caractérisé en ce que** le flan-support (**2**) est réalisé par au moins une plaque de matière plastique (**2**_{**1**}) présentant une épaisseur comprise entre 0,3 et 2mm et de préférence entre 0,5 et 0,9mm et de préférence encore de l'ordre de 0,7mm.

2. Panneau informatif selon la revendication 1, **caractérisé en ce que** le flan-support (**2**) est réalisé par au moins une plaque de matière plastique (**2**_{**1**}) fixée avec une plaque métallique **(2**_{**2**}).

3. Panneau informatif selon la revendication 2, **caractérisé en ce que** la plaque métallique (**2**_{**2**}) est interposée entre la plaque de contraste (**3**) et la plaque de matière plastique (**2**_{**1**}).

4. Panneau informatif selon l'une des revendications 1 à 3, **caractérisé en ce que** la plaque de matière plastique (**2**_{**1**}) est réalisée à partir de polypropylène de préférence recyclé.

5. Panneau informatif selon l'une des revendications 1 à 4, **caractérisé en ce que** la plaque de matière plastique (**2**_{**1**}) comporte des charges augmentant sa rigidité et/ou son aptitude au vieillissement.

6. Panneau informatif selon la revendication 2 ou 3, **caractérisé en ce que** la plaque métallique (**2**_{**2**}) possède une épaisseur comprise entre 0 et 1mm et de préférence entre 0,3 et 0,7mm et de préférence encore de l'ordre de 0,5mm.

7. Panneau informatif selon l'une des revendications 2 à 6, **caractérisé en ce que** la plaque de matière plastique (**2**_{**1**}) est fixée avec la plaque métallique (**2**_{**2**}) à l'aide de moyens d'assemblage du type mécanique ou adhésif.

8. Panneau informatif selon l'une des revendications 1 à 7, **caractérisé en ce que** le flan-support (**2**) est fixé avec la plaque de contraste (**3**) réalisée par une plaque de fond métallique.

9. Panneau informatif selon l'une des revendications 1 à 7, **caractérisé en ce que** le flan-support (**2**) est fixé avec la plaque de contraste (**3**) réalisée par un film adhésif (**3**_{**1**}) métallique ou non et éventuellement revêtu d'un film décoratif (**3**_{**2**}).

10. Panneau informatif selon l'une des revendications 1 à 7, **caractérisé en ce que** le flan-support (**2**) est destiné à recevoir après l'opération de réalisation du ou des signe(s), la plaque de contraste (**3**) réalisée par une pellicule colorée obtenue par une opération de marquage à chaud ou de peinture.
